# EUROPEAN PATENT SPECIFICATION

(11) **EP 3 138 376 B1**
(45) Date of publication and mention of the grant of the patent: **09.05.2018**
(21) Application number: 16187151.2
(22) Date of filing: 02.09.2016
(51) Int. Cl.: A01D 34/416

(54) **WEEDING ROTOR**
UNKRAUTJÄTROTOR
ROTOR DE DÉSHERBAGE

(30) Priority: 03.09.2015 IT UB20153397
(43) Date of publication of application: 08.03.2017
(73) Proprietor: Dragone S.r.l., 14054 Castagnole Delle Lanze (IT)
(72) Inventor: RAPALINO, Claudio, 14054 CASTAGNOLE DELLE LANZE (IT)
(74) Representative: Eccetto, Mauro

(56) References cited:
- EP-A1- 2 092 816
- WO-A1-2014/083550

## Description

The present invention concerns a weeding rotor.

In many areas of application, mechanical weeding is gradually replacing chemical weeding in order to reduce the contaminants in the environment. In accordance with this trend, weeding rotors have been recently improved which comprise a shaft and a plurality of working wires that are distributed along the shaft, are brought into rotation by the shaft to hit the weeds with the working wires to uproot and/or cut them at the ground. For example, the rotor subject of the patent application EP 2,092,816 A1 comprises a motor-driven shaft rotatable about a longitudinal axis; a tube arranged about the shaft; a plurality of working wires, each of which is wrapped about the shaft, is housed in the tube and has its respective free ends out of the tube. The patent application WO 2014/083550 concerns a rotor comprising a motor-driven shaft having an hexagonal section and extending along a longitudinal axis; a plurality of modules arranged about the shaft and mutually coupled in the axial direction; a plurality of anchors, each of which is arranged in a respective module and is coupled with the shaft; and a plurality of working wires, each of which is coupled with a respective anchor, is wrapped in a respective module and has two opposite ends protruding from the module. In use, the modules are mutually axially engaged and rotate integrally to the shaft. Both the aforesaid weeding rotors have the drawback of being subject to wear if they come in contact with the ground.

An object of the present invention is to provide a rotor of the aforesaid type, which mitigates the drawbacks of the known art.

In accordance with the present invention, it is provided a weeding rotor, in particular for agricultural use, the rotor comprising:
- a tubular shaft, which extends along a longitudinal axis, is motorized for rotating about the longitudinal axis and comprises a cylindrical structure and an interchangeable protective tube, which is arranged about and fitted onto the cylindrical structure and is configured to glide on the ground; and
- a plurality of working wires, each of which is housed in the tubular shaft and is configured for arranging two respective end portions through two respective openings of the tubular shaft out of the tubular shaft. In this way, the protective tube is easily replaceable and is especially configured to glide on the ground and allows an easy positioning of the protective tube.

In particular, the protective tube is rigid and is made of a polymeric material, in particular PTFE or PA or PE. These materials are able to confer a good mechanical impact resistance and a low friction coefficient with the ground.

In particular, the protective tube has a given thickness greater than the thickness of the cylindrical structure, and an outer face configured to glide on the ground. In this way, the protective tube provides an effective protective barrier for the cylindrical structure and may possibly have some recesses to protect the working wires. Furthermore, the protective tube has openings, each of which is shaped as a wire guide bushing for guiding the working wire. Therefore, the characteristics of the material composing the protective tube allow a low friction between the protective tube and the working wire.

In particular, the protective tube has at least one recess at each opening to prevent the working wire from being clamped and cut by a stone at the outlet opening. Moreover, each recess has rounded edges to reduce the chance of cutting the working wire. In particular, the recesses may have different shapes. For example, the recesses may have an annular shape about the longitudinal axis, a flared shape towards the outside at each first opening, and a helical shape.

Further characteristics and advantages of the present invention will become clear from the following description of its non-limiting embodiments, with reference to the figures of the accompanying drawings, showing as follows.
- Figure 1 is an elevational view, with parts removed for clarity, of a weeding rotor made in accordance with the present invention;
- Figure 2 is a view in longitudinal section on an enlarged scale, with parts removed for clarity, of the rotor of Figure 1;
- Figure 3 is a sectional view, on an enlarged scale and with parts removed for clarity, of a detail of Figure 2;
- Figure 4 is an elevational view, with parts removed for clarity, of a weeding rotor in accordance with a second embodiment of the weeding rotor object of the present invention;
- Figure 5 is a view in longitudinal section, with parts removed for clarity and on an enlarged scale, of the rotor of Figure 4;
- Figure 6 is a sectional view, on an enlarged scale and with parts removed for clarity, of a detail of Figure 5;
- Figures 7 and 8 are elevation views, with parts removed for, of two further embodiments of the weeding rotor object of the present invention.

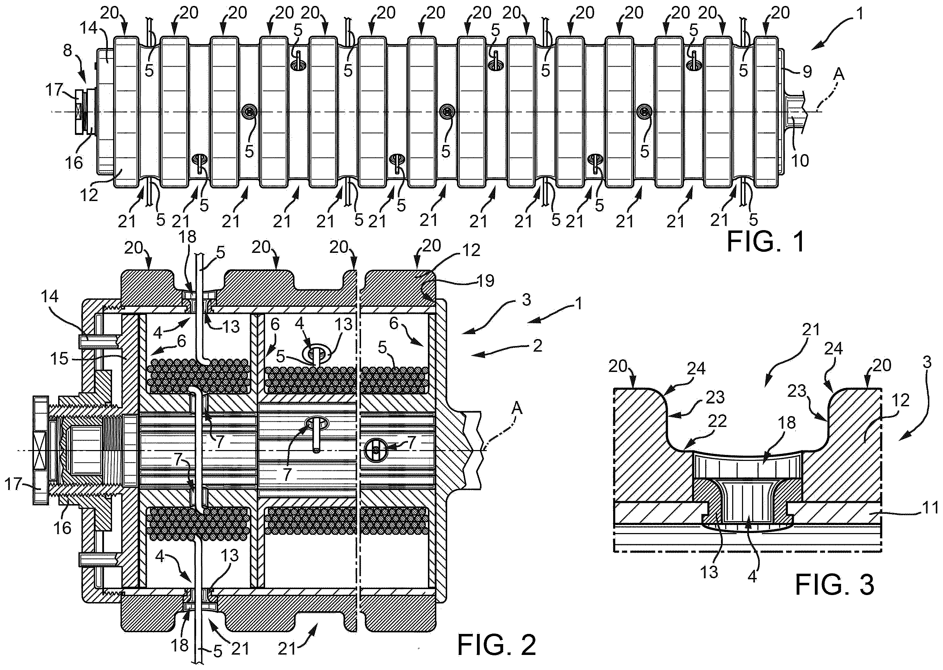

Figure 1 indicates with the reference number 1 a weeding rotor, in particular for agricultural use. The rotor 1 has a substantially cylindrical shape, extends along a longitudinal axis A and, in use, is mounted and is rotated about the longitudinal axis A by means of a motor unit not shown in the accompanying Figures.

With reference to Figure 2, the rotor 1 comprises a tubular shaft 2, which extends along the longitudinal axis A and comprises a cylindrical wall 3 provided with a plurality of openings 4 arranged in opposite pairs along respective diametrical directions; a plurality of working wires 5 arranged in the tubular shaft 2 and whose free ends protrude from the openings 4. The rotor 1 comprises a plurality of spools 6 housed in the tubular shaft 2 and arranged side by side along the longitudinal axis A. Each spool 6 is selectively rotatable about the longitudinal axis A with respect to the tubular shaft 2, and has at least two openings 7, mutually aligned and possibly aligned with two respective openings 4. Each working wire 5 is wound about a respective spool 6 and has two respective end portions out of the tubular shaft 2. The rotor 1 further comprises a pusher mechanism 8 for selectively axially compressing the spools 6 against each other and against one end of the tubular shaft 2 for making them integral with the tubular shaft 2 and for selectively releasing the spools 6 so that they are free to rotate with respect to the tubular shaft 2. In more detail, the tubular shaft 2 comprises a blind end 9 integral to a joint 10 coupled with a motor unit not shown in the accompanying figures. The cylindrical wall 3 comprises a cylindrical structure 11 integral with the blind end 9; and a protective tube 12 made of a plastic material and fitted onto the cylindrical structure 11; and a plurality of bushings 13, each of which is mounted on the cylindrical structure 11 and defines a respective opening 4 for guiding the working wire 5 and for reducing the friction between the working wire 5 and the cylindrical structure 11. In the example shown, the pusher mechanism 8 comprises a lid 14 screwed on the cylindrical structure 11; a pusher 15, which is in contact with an end spool 6 and is guided in the axial direction by the lid 14; and a control unit 16, which is rotatably driven about the longitudinal axis A by the lid 14, and protrudes out of the tubular shaft 2 to be accessible to an operator. Therefore, the lid 14, the pusher 15 and the control unit 16 are coupled to transform the rotary motion about the longitudinal axis A of the control unit 16 in a translational motion of the pusher 15 along the longitudinal axis A. In other words, the control unit 16 includes a threaded sleeve, which engages a sleeve portion of the pusher 15. As a whole, the lid 14 has an annular shape to house the pusher mechanism 8, which has an annular shape and defines a gap to allow access inside the spools 6. The tubular shaft 2 further comprises a threaded cap 17, configured to be screwed in the pusher 15 to close this gap. In the example shown, the cylindrical structure 11 is defined by a metal cylinder, whose function is transmitting the rotary motion to the lid 14 and to the spools 6, which are arranged between the lid 14 and the bottom wall 9. The openings 4, in this case the bushings 13, are evenly distributed along the cylindrical wall 3, in particular the openings 4 are distributed along the cylindrical wall 3 along two respective parallel helical paths. The protective tube 12 has openings 18, which have the same distribution pattern of the openings 4 so that they aligned with the respective openings 4 and are sized to house the portion of the bushings 13 that protrude with respect to the cylindrical structure 11. The protective tube 12 is interchangeable and is fitted onto the cylindrical structure 11, is arranged in abutment against a shoulder 19 at the blind end 9 and is axially secured by means of the lid 14. The bushings 13 slightly protrude from the cylindrical structure 11 and the protruding parts of the bushings 13 are housed in the openings 18, thus contributing to a defined position of the protective tube 12 both in the axial direction and in the circumferential direction. The protective tube 12 has an outer face 20 and a plurality of recesses 21, which have an annular shape and are evenly distributed along the axis A.

With reference to Figure 3, each recess 21 has a bottom face 22 along which two openings 18 have been formed; and two side faces 23, which are coupled with the outer face 20 with rounded edges 24. The protective tube 12 is rigid, and is made of a polymeric material, in particular PTFE or PA or PE. The selected material must have a low friction coefficient with the ground and a good abrasion resistance, which allows to easily glide on the ground.

With reference to Figure 1, when the weeding rotor 1 is in use, the rotor 1 can be at least partially in contact with the ground along the outer surface 20 of the protective tube 12. The partial support of the rotor 1 on the ground facilitates the support and the control of the rotor 1. In other words, the support of the rotor 1 improves the maneuverability of the rotor 1, when the rotor 1 is cantileverly mounted on an interceps machine, not shown in the attached figures. The protective tube 12 ensures a low friction coefficient between the rotor 1 and the ground while preserving the structural parts of the rotor 1. Furthermore, the recesses 21 protect the working wire, thus reducing the possibility of clamping the working wire 5 between the bushing 13 (Figure 3) and a stone or between other edges and hard materials, thus causing the cutting of the working wire 5. When the protective tube 12 is worn, it is replaced by an equal or similar protective tube 12 to restore the characteristics of the original rotor 1.

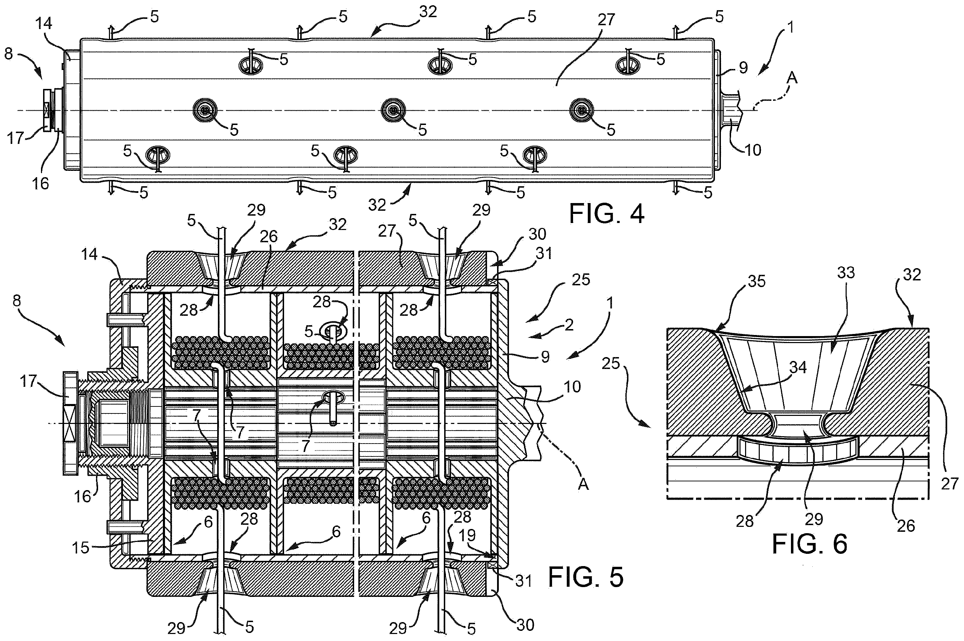

The embodiment shown in Figures 4, 5 and 6 differs from the one of Figures 1, 2 and 3 in that the cylindrical wall 3 is replaced by a cylindrical wall 25.

With reference to Figure 5, the cylindrical wall 25 comprises a cylindrical structure 26 and a protective tube 27 fitted onto the cylindrical structure 26, which has openings 28 for the passage of the working wire 5. Analogously, also the protective tube 27 has openings 29, which allow the passage of the working wire 5. The openings 29 are relatively small and have rounded edges to act as a bushing. On the contrary, the openings 28 are relatively large to avoid that the working wire 5 is in contact with the cylindrical structure 26. The free end of the protective tube 12 has at least one axial recess 30 at the shoulder 19, and the blind end 9 has a protrusion 31 configured to engage the recess 30 and to avoid any possible rotation of the protective tube 27 with respect to the cylindrical structure 26 and to compensate for the absence of the bushings 13. The axial locking of the protective tube 27 is assured by pushing the lid 14 against the shoulder 19.

With reference to Figure 6, the protective tube 12 has an outer face 32 and a recess 33 at each opening 29.

Therefore, each opening 29 is coupled with the outer face 32 by means of a face 34 flared towards the outside and coupled with the outer face 32 by means of a rounded edge 35.

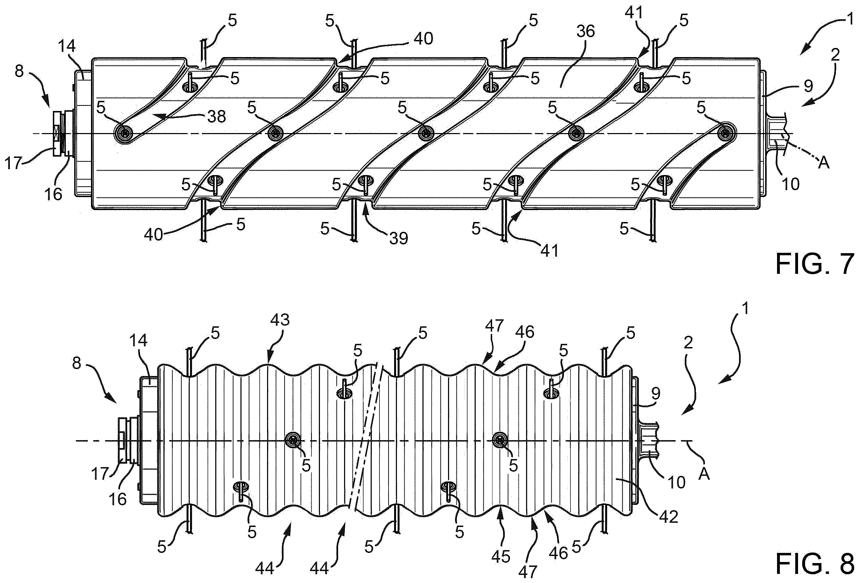

With reference to the embodiment of Figure 7, the rotor 1 has a protective tube 36, which has an outer face 37 and two parallel helical recesses 38. The recesses 38 have a bottom face 39 and two side faces 40 coupled with the outer face 37 by means of a rounded edge 41.

With reference to the embodiment of Figure 8, the rotor 1 has a protective tube 42, which is a variant of the protective tube 12 of Figures 1-3. The protective tube 42 has an outer face 43; and a plurality of annular recesses 44, each of which has a bottom face 45, which are connected by means of rounded edges 46 and 47 with very large bending radii, so that the protective tube 42 has a corrugated profile. Since the weeding rotor 1 is advanced in an advancement direction, thus forming a relatively small angle with the longitudinal axis A, the protective tube 42 has a low advancement resistance.

Finally, it is evident that to weeding rotor here described can be subject to modifications and variations without departing from the scope of the appended claims. In particular, the cylindrical structure may have the shape of a cage, while the protective tube may have shapes different from those described. In particular, the recesses may have different shapes depending on the type of application of the rotor. Moreover, the manufacture of the wire guide bushings integral with the protective tube is a technical solution applicable to any type of tube regardless of the type of recesses of the protective tube. Furthermore, the cylindrical structure may have shapes other than those described.

## Claims

1. A weeding rotor, in particular for agricultural use, the rotor comprising:
- a tubular shaft (2), which extends along a longitudinal axis (A), is motorized for rotating about the longitudinal axis (A) and comprises a cylindrical structure (11; 26) and an interchangeable protective tube (12; 27; 36; 42), which is arranged about and fitted onto the cylindrical structure (11; 26) and is configured to glide on the ground; and
- a plurality of working wires (5), each of which is housed in the tubular shaft (2) and is configured for arranging two respective end portions through two respective openings (4, 18; 28, 29) of the tubular shaft (3; 25) out of the tubular shaft (2).

2. The rotor according to Claim 1, wherein the protective tube (12; 27; 36; 42) is rigid and is made of a polymer material, in particular PTFE or PA or PE.

3. The rotor according to Claim 1 or 2, wherein the protective tube (12; 27; 36; 42) has a given thickness greater than the thickness of the cylindrical structure (11; 26) and an outer face (20; 32; 37; 43) configured to glide on the ground.

4. The rotor according to any one of the preceding Claims, wherein the protective tube (27) has openings (29), each of which is shaped as a wire guide bushing for guiding the working wire (5).

5. The rotor according to any one of the preceding Claims, wherein the protective tube (12; 27; 36; 42) has at least one recess (21; 33; 38; 44) at each opening (4, 18; 29, 29) .

6. The rotor according to Claim 5, wherein each recess (21, 33, 38; 44) has rounded edges.

7. The rotor according to Claim 5 or 6, wherein each recess (21; 44) has an annular shape about the longitudinal axis (A), in particular the protective tube (42) has an undulated profile.

8. The rotor according to Claim 5 or 6, wherein each recess (33) has a flared shape towards the outside at each first opening.

9. The rotor according to Claim 5 or 6, wherein each recess (38) has a helical shape.

## Patentansprüche

1. Unkrautjätrotor, insbesondere für landwirtschaftliche Verwendung, wobei der Rotor aufweist:
- eine sich entlang einer Achse (A) erstreckende rohrförmige Welle (2) ist motorisiert, um um die Längsachse (A) zu rotieren, und weist eine zylindrische Struktur (11; 26) und ein um die zylindrische Struktur (11; 26) herum angeordnetes und daran befestigtes auswechselbares Schutzrohr (12; 27; 36; 42) auf, das konfiguriert ist, um auf dem Boden zu gleiten; und
- mehrere Arbeitsdrähte (5), von denen jeder in der rohrförmigen Welle (2) untergebracht ist und konfiguriert ist, um zwei jeweilige Endabschnitte durch zwei jeweilige Öffnungen (4, 18; 28, 29) der rohrförmigen Welle (3; 25) aus der rohrförmigen Welle (2) heraus anzuordnen.

2. Rotor nach Anspruch 1, wobei das Schutzrohr (12; 27; 36; 42) steif ist und aus einem Polymermaterial, insbesondere PTFE oder PA oder PE, hergestellt ist.

3. Rotor nach Anspruch 1 oder 2, wobei das Schutzrohr (12; 27; 36; 42) eine gegebene Dicke, die größer als die Dicke der zylindrischen Struktur (11; 26) ist, und eine Außenfläche (20; 32; 37; 43) hat, die konfiguriert ist, um auf dem Boden zu gleiten.

4. Rotor nach einem der vorstehenden Ansprüche, wobei das Schutzrohr (27) Öffnungen (29) hat, von denen jede als eine Drahtführungsbuchse zum Führen des Arbeitsdrahts (5) gestaltet ist.

5. Rotor nach einem der vorstehenden Ansprüche, wobei das Schutzrohr (12; 27; 36; 42) mindestens eine Aussparung (21; 33; 38; 44) an jeder Öffnung (4, 18; 29, 29) hat.

6. Rotor nach Anspruch 5, wobei jede Aussparung (21, 33, 38; 44) gerundete Kanten hat.

7. Rotor nach Anspruch 5 oder 6, wobei jede Aussparung (21; 44) die Form eines Rings um die Längsachse (A) hat, insbesondere das Schutzrohr (42) ein welliges Profil hat.

8. Rotor nach Anspruch 5 oder 6, wobei an jeder ersten Öffnung jede Aussparung (33) eine sich nach außen weitende Form hat.

9. Rotor nach Anspruch 5 oder 6, wobei jede Aussparung (38) eine helikale Form hat.

## Revendications

1. Un rotor de désherbage, en particulier à usage agricole, le rotor comprenant:
- un arbre tubulaire (2), qui s'étend selon un axe longitudinal (A), est motorisé pour tourner autour de l'axe longitudinal (A) et comporte une structure cylindrique (11 ; 26) et un tube de protection interchangeable (12; 27; 36; 42), qui est disposé autour et est monté sur la structure cylindrique (11; 26) et est configuré pour glisser sur le sol; et
- une pluralité de fils de travail (5), chacun étant logé dans l'arbre tubulaire (2) et configuré pour agencer deux parties d'extrémité respectives à travers deux ouvertures respectives (4, 18; 28, 29) de l'arbre tubulaire (3; 25) hors de l'arbre tubulaire (2).

2. Le rotor selon la revendication 1, dans lequel le tube de protection (12; 27; 36; 42) est rigide et est constitué d'un matériau polymère, en particulier du PTFE ou PA ou PE.

3. Le rotor selon la revendication 1 ou 2, dans lequel le tube de protection (12; 27; 36; 42) a une épaisseur donnée supérieure à l'épaisseur de la structure cylindrique (11; 26) et une face externe (20; 32; 37; 43) configurée pour glisser sur le sol.

4. Le rotor selon l'une quelconque des revendications précédentes, dans lequel le tube de protection (27) comporte des ouvertures (29) dont chacune a la forme d'une douille de guidage de fil pour guider le fil de travail (5).

5. Le rotor selon l'une quelconque des revendications précédentes, dans lequel le tube de protection (12; 27; 36; 42) comporte au moins un évidement (21; 33; 38; 44) au niveau de chaque ouverture (4, 18; 29, 29).

6. Le rotor selon la revendication 5, dans lequel chaque évidement (21, 33, 38, 44) a des bords arrondis.

7. Le rotor selon la revendication 5 ou 6, dans lequel chaque évidement (21; 44) a une forme annulaire autour de l'axe longitudinal (A), en particulier le tube de protection (42) a un profil ondulé.

8. Le rotor selon la revendication 5 ou 6, dans lequel chaque évidement (33) a une forme évasée vers l'extérieur à chaque première ouverture.

9. Le rotor selon la revendication 5 ou 6, dans lequel chaque évidement (38) a une forme hélicoïdale.
